# FASCICULE DE BREVET EUROPEEN

(11) **EP 2 053 257 B1**
(45) Date de publication et mention de la délivrance du brevet: **19.10.2011**
(21) Numéro de dépôt: 08167148.9
(22) Date de dépôt: 21.10.2008
(51) Int. Cl.: F16B 39/10, F16B 39/24

(54) **Dispositif de blocage en rotation d'un assemblage vissé, assemblage comprenant un tel dispositif et utilisation d'un tel assemblage dans la construction aéronautique**
Vorrichtung zur Drehblockierung einer Schraubenverbindung, eine solche Vorrichtung umfassende Verbindung und Einsatz einer solchen Verbindung beim Flugzeugbau
Device for blocking the rotation of a screwed assembly, assembly comprising such a device and use of such an assembly in aeronautical construction

(30) Priorité: 22.10.2007 FR 0758459
(43) Date de publication de la demande: 29.04.2009
(73) Titulaire: SKF Aerospace France, 26240 SAINT VALLIER SUR RHONE (FR)
(72) Inventeur: Gagneur, Didier, 26100, ROMANS-SUR-ISERE (FR)
(74) Mandataire: Myon, Gérard Jean-Pierre

(56) Documents cités:
- EP-A- 1 672 231
- GB-A- 743 247

## Description

La présente invention concerne un dispositif de blocage en rotation, pour immobiliser un assemblage vissé. Par ailleurs, l'invention concerne un assemblage vissé comprenant un tel dispositif de blocage en rotation. D'autre part, l'invention concerne l'utilisation d'un tel assemblage pour la construction aéronautique. La présente invention se rapporte donc au domaine des composants mécaniques pour assemblage vissé, en particulier dans le domaine de la construction aéronautique.

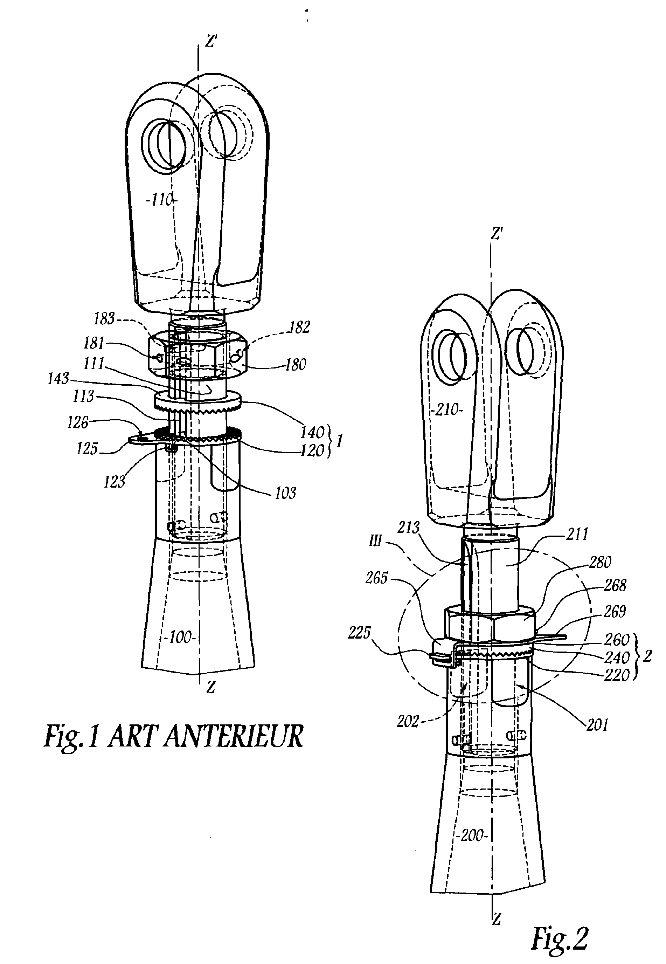

De EP-A-1 672 231, sur lequel est basé le préambule de la revendication 1, on connaît un dispositif de freinage en rotation, pour maintenir un assemblage vissé et empêcher son dévissage intempestif, par exemple sous l'effet de vibrations. La figure 1 illustre, en position desserrée, un autre assemblage vissé de l'art antérieur tel qu'utilisé dans le domaine de la construction aéronautique et comprenant un dispositif de freinage de l'art antérieur destiné à empêcher le dévissage de cet assemblage. L'assemblage comprend une tête de bielle pour la construction aéronautique formant un embout 110, un corps de bielle formant un tube 100, ainsi qu'un dispositif de freinage 1 et un écrou 180. L'embout 110 est muni d'une tige filetée 111 qui peut être vissée dans un filetage correspondant du tube 100 et sur laquelle est serré l'écrou 180.

Le dispositif de freinage 1 comprend une première rondelle 120, une deuxième rondelle 140 et un fil-frein non représenté. Les rondelles 120 et 140 sont enfilées sur la tige filetée 111 entre le tube 100 et l'écrou 180. La rondelle 120 comporte deux tenons disposés sur sa face tournée vers le tube 100, dont l'un est représenté à la figure 1 avec la référence 123. Le tenon 123 coopère avec une encoche 103 située sur l'extrémité du tube 100, ce qui permet de bloquer la rondelle 120 en rotation par rapport au tube 100. Les faces des rondelles 120 et 140 qui sont destinées à être en contact après serrage du dispositif de freinage comportent des stries complémentaires formant autant de moyens de blocage mutuels en rotation des rondelles 120 et 140.

La périphérie interne de la deuxième rondelle 140 est munie d'une clavette 143 qui pénètre dans une rainure longitudinale 113 réalisée le long de la tige filetée 111. La rondelle 140 est ainsi bloquée en rotation par rapport à la tige filetée 111.

Après serrage de l'écrou 180 sur la tige filetée 111, l'écrou 180 et les rondelles 120 et 140 sont comprimés contre le tube 100 et les rondelles 120 et 140 sont mutuellement bloquées en rotation par l'imbrication de leurs stries.

La périphérie externe de la première rondelle 120 comporte un ergot 125 percé d'un trou 126. L'écrou 180 comporte trois trous 181, 182 et 183 percés selon des directions sensiblement orthoradiales. Pour freiner l'écrou dans le sens du dévissage et maintenir ainsi la cohésion de l'assemblage, un opérateur doit passer un fil-frein à travers les trous 126 et 181 à 183, puis tendre le fil-frein en le torsadant sur lui-même. Le fil-frein maintient ainsi le contact entre l'écrou, les rondelles et le tube.

Cependant, un tel assemblage est relativement long à réaliser, notamment en raison du passage du fil-frein par l'opérateur. En outre, il existe un risque d'erreur dans le sens de montage du fil-frein, car le pas du filetage peut être à gauche ou à droite. De plus, la qualité du freinage en rotation assurée par le fil-frein dépend de la tension donnée au fil-frein par l'opérateur ; si l'opérateur tend insuffisamment le fil-frein, l'écrou et donc le dispositif de freinage peuvent se desserrer dans une certaine mesure.

En outre, un tel assemblage nécessite un écrou spécifique puisque percé, ce qui en augmente le coût. Par ailleurs, l'extrémité torsadée du fil-frein peut blesser un opérateur ou accrocher ses vêtements de protection, ce qui est rédhibitoire pour certaines applications aéronautiques.

La présente invention vise notamment à remédier à ces inconvénients, en proposant un dispositif de blocage en rotation pour assemblage vissé efficace, fiable, simple et rapide à monter, économique et sans risque d'accrochage pour les opérateurs.

A cet effet, l'invention a pour objet un dispositif de blocage en rotation, pour immobiliser un assemblage comprenant un embout muni d'un filetage vissé dans un tube, ledit embout comportant au moins une rainure longitudinale s'étendant selon l'axe de filetage de l'embout, ledit tube comportant au moins un élément de blocage en rotation situé sur son extrémité de réception de l'embout, ainsi qu'un écrou apte à être vissé sur l'embout, le dispositif comprenant :
- une première rondelle dont une première face est pourvue d'au moins un composant de blocage en rotation apte à coopérer avec ledit élément de blocage en rotation, et
- une deuxième rondelle dont la périphérie interne est munie d'au moins une clavette apte à pénétrer dans ladite rainure longitudinale,
la périphérie externe de la première rondelle ou de la deuxième rondelle étant associée à au moins un ergot, et deux faces respectives des première et deuxième rondelles comportant des moyens de blocage mutuel en rotation,
caractérisé en ce qu'il comprend, en outre, une troisième rondelle comportant au moins un organe de blocage en rotation de l'écrou, et en ce que la périphérie externe de la troisième rondelle comporte au moins une patte adaptée pour coopérer par complémentarité de formes avec ledit ergot, de façon à bloquer en rotation, d'une part, la première ou la deuxième rondelle associée à l'ergot et, d'autre part, la troisième rondelle.

Le terme embout est ici employé au sens générique. Dans le domaine de la construction aéronautique, il peut désigner un prolongateur ou un embout proprement dit muni d'un composant d'accrochage. Plus généralement, le terme embout désigne ici toute pièce comprenant une tige filetée, voire une tige filetée elle-même, c'est-à-dire une simple tige munie d'un filetage

Un dispositif de blocage en rotation conforme à la présente invention présente donc une fiabilité et une simplicité de montage accrue. Un assemblage conforme à l'invention comprenant un tel dispositif s'avère plus rapide à monter, sans risque d'erreur, tout en présentant une bonne précision de réglage de la longueur de filetage en prise. De plus, le dispositif de freinage conforme à l'invention ne présente pas de pièce saillante susceptible d'accrocher un opérateur. Par ailleurs, l'assemblage conforme à l'invention ne nécessite plus d'écrou spécifiquement percé pour le fil-frein et le dispositif de blocage en rotation est compatible avec les embouts et tubes actuels.

Selon des caractéristiques avantageuses mais facultatives de l'invention, prises isolément ou selon toute combinaison techniquement admissible :
- l'ergot est associé à la première rondelle ;
- chaque rondelle présente une forme globalement plate et cylindrique ;
- l'ergot présente un profil plat ou coudé et la patte comprend une partie coudée formant une aile percée d'une lumière adaptée pour recevoir, de manière complémentaire, une partie terminale de l'ergot ;
- la patte présente un profil en Z et l'ergot présente un profil plat ou coudé ainsi qu'une lumière adaptée pour recevoir, de manière complémentaire, une partie terminale de la patte ;
- les moyens de blocage mutuel en rotation des première et deuxième rondelles comprennent deux séries de stries complémentaires ;
- l'organe de blocage en rotation de l'écrou comporte deux languettes qui s'étendent à la périphérie externe de la troisième rondelle et qui sont rabattables sur l'écrou ;
- les première et deuxième rondelles sont réalisées en un matériau dur et la troisième rondelle est réalisée en un matériau ductile.

Par ailleurs, l'invention a pour objet un assemblage comprenant un embout muni d'un filetage à visser dans un tube, un écrou apte à être vissé sur l'embout, cet embout comportant au moins une rainure longitudinale s'étendant selon l'axe de filetage de l'embout, ce tube comportant au moins un élément de blocage en rotation situé sur son extrémité de réception de l'embout, caractérisé en ce qu'il comprend un dispositif de blocage en rotation tel qu'exposé ci-dessus, de façon à immobiliser cet assemblage.

D'autre part, l'invention a pour objet l'utilisation pour la construction aéronautique d'un assemblage tel qu'exposé ci-dessus, dans laquelle le tube est un corps de bielle et l'embout est une tête de bielle.

La présente invention sera bien comprise et ses avantages ressortiront aussi à la lumière de la description qui va suivre, donnée uniquement à titre d'exemple et faite en référence aux dessins annexés, dans lesquels :
- la figure 1 est une vue en perspective d'un assemblage de l'art antérieur ;
- la figure 2 est une vue en perspective d'un assemblage conforme à l'invention, à l'état serré et comprenant un dispositif de blocage conforme à l'invention ;
- la figure 3 est une vue à plus grande échelle du détail III de la figure 2 ;
- la figure 4 est une vue en perspective éclatée du dispositif de blocage de la figure 2 ;
- la figure 5 est une vue en perspective du dispositif de blocage de la figure 4, dans une position de réglage ;
- la figure 6 est une vue de dessus du dispositif de la figure 5 ;
- la figure 7 est une vue de côté du dispositif de la figure 5, dans sa position de réglage ;
- la figure 8 est une vue analogue à la figure 7, montrant le dispositif de blocage dans la position serrée de la figure 3 ;
- la figure 9 est une vue en perspective éclatée d'un dispositif de blocage conforme à un deuxième mode de réalisation de l'invention ;
- la figure 10 est une vue en perspective éclatée d'un dispositif de blocage conforme à un troisième mode de réalisation de l'invention ;
- la figure 11 est une vue analogue à la figure 5 du dispositif de la figure 10;
- la figure 12 est une vue de dessus du dispositif de la figure 10 ;
- la figure 13 est une vue de côté du dispositif de la figure 11, dans une position de réglage ;
- la figure 14 est une vue en perspective éclatée d'un dispositif de blocage conforme à un quatrième mode de réalisation de l'invention ; et
- la figure 15 est une vue de côté du dispositif de la figure 14 à l'état serré.

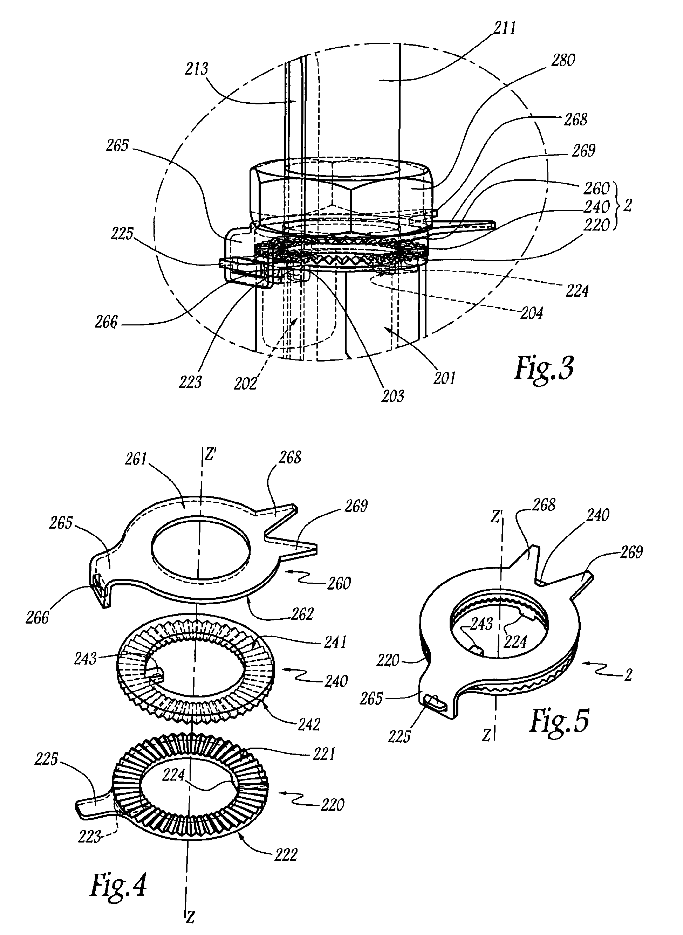

L'assemblage illustré par les figures 2 et 3 comprend un tube 200, un embout 210 et un dispositif 2 de blocage en rotation de l'assemblage. En l'occurrence, le tube 200 et l'embout 210 sont constitués respectivement d'un corps et d'une tête de bielle utilisés dans la construction aéronautique. Les éléments de l'assemblage illustrés à la figure 2 qui correspondent à des éléments de l'assemblage de l'art antérieur illustré à la figure 1, portent les mêmes références augmentées de 100.

L'embout 210 est muni d'un filetage réalisé sur une tige 211 destinée à être vissée dans un filetage correspondant du tube 200. La tige filetée 211 comporte une rainure longitudinale 213 semblable à la rainure 113, qui s'étend selon l'axe Z-Z' du filetage de l'embout 210 et qui est représentée en traits pointillés sur la figure 2.

Le tube 200 comporte deux encoches 203 et 204, qui sont situées sur l'extrémité du tube 200 destinée à recevoir l'embout 210. Les encoches 203 et 204 sont réalisées le long d'un même diamètre du tube 200 et elles constituent des éléments de blocage en rotation du tube 200 par rapport au dispositif 2, comme cela est exposé ci-après.

Comme le montrent les figures 2 à 6, le dispositif 2 comprend une première rondelle 220 et une deuxième rondelle 240. La face inférieure 222 de la première rondelle 220 comporte deux tenons 223 et 224. Les tenons 223 et 224 constituent des composants de blocage en rotation de la rondelle 220 par rapport au tube 200. Les tenons 223 et 224 sont adaptés pour coopérer, par complémentarité de formes, respectivement avec les encoches 203 et 204.

La périphérie interne de la deuxième rondelle 240, c'est-à-dire sa paroi radiale tournée vers l'axe Z-Z', comporte une clavette saillante 243, qui est apte à pénétrer dans la rainure longitudinale 213, de façon à bloquer en rotation la deuxième rondelle 240 par rapport à l'embout 210.

Les adjectifs « interne » et « externe » sont employés ici pour qualifier l'orientation des éléments auxquels ils se rapportent par référence à l'axe Z-Z' qui est vertical et ascendant sur les figures 2 à 8. Une direction est ici qualifiée de « radiale », « axiale » ou « orthoradiale » par référence à l'axe Z-Z'. Une surface est ici qualifiée de « radiale » ou d'« axiale » selon la direction d'une normale à cette surface par référence à l'axe Z-Z'. Par « longitudinale », on désigne une direction qui s'étend suivant la longueur de l'assemblage, c'est-à-dire parallèlement à l'axe Z-Z'.

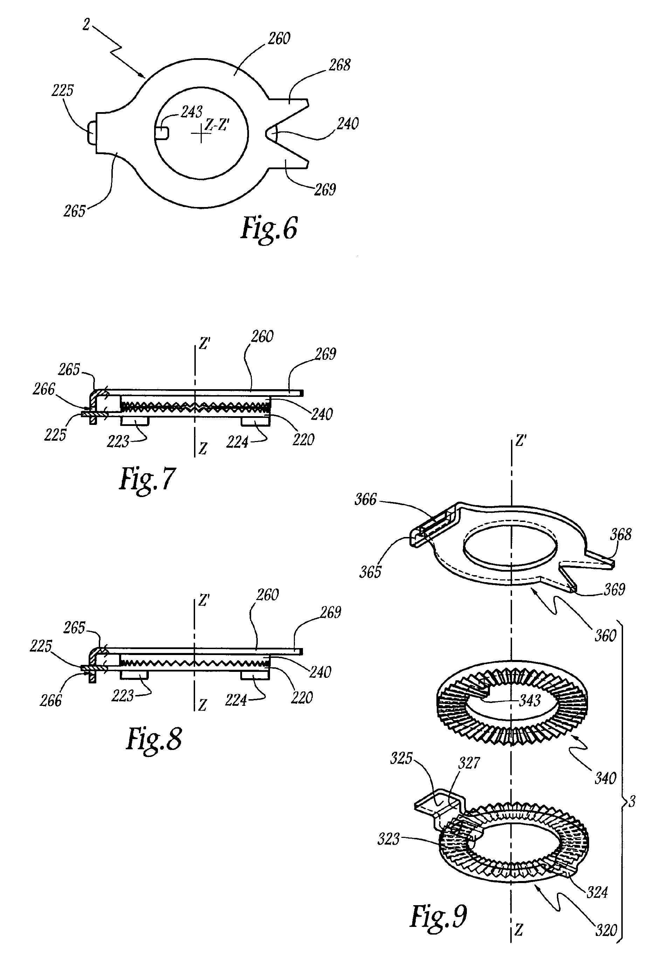

La face supérieure 221 de la rondelle 220 et la face inférieure 242 de la rondelle 240 comportent des moyens de blocage mutuels en rotation, qui comprennent ici deux séries de stries radiales à profils complémentaires. Les adjectifs « inférieur » et « supérieur » sont ici employés par référence au sens ascendant de l'axe Z-Z'. Lorsque l'assemblage est monté, en position desserrée ou en position serrée comme sur les figures 2, 3 et 8, la face supérieure 221 et la face inférieure 242 se trouvent en regard l'une de l'autre, comme le montre la figure 7, voire en contact, comme le montre la figure 8.

Les stries présentent un profil de dents triangulaires. Elles s'étendent radialement depuis l'axe Z-Z' sur la majeure partie des faces 221 et 242, offrant ainsi une multitude de positions de réglage entre les rondelles 220 et 240. Après serrage mutuel des stries sous l'action d'un couple de serrage, les rondelles 220 et 240 n'ont plus de mouvement relatif possible.

La périphérie externe, c'est-à-dire la paroi radiale externe, de la première rondelle 220 est associée à un ergot saillant 225 qui contribue au blocage en rotation de l'assemblage, comme cela est exposé ci-après. Dans le mode de réalisation illustré par les figures 2 à 8, l'ergot 225 présente un profil plat. Son épaisseur est de l'ordre de celle de la partie non striée de la première rondelle 220.

Le dispositif 2 comprend en outre une troisième rondelle 260 qui est disposée au-dessus de et en contact avec la face supérieure 241 de la deuxième rondelle 240. A la périphérie externe de la troisième rondelle 260 s'étend une patte 265 qui est adaptée pour coopérer par complémentarité de formes avec l'ergot 225, de façon à bloquer en rotation la rondelle 260 par rapport à la rondelle 220. Dans ce but, la patte 265 comprend une partie coudée en « L » qui forme une aile libre percée d'une lumière 266 oblongue et apte à recevoir la partie terminale de l'ergot 225. En position de coopération, comme le montrent les figures 5 à 8, l'ergot 225 traversant la lumière 266 bloque la rotation relative entre, d'une part, la première rondelle 220 et, d'autre part, la troisième rondelle 260.

Après montage du dispositif 2 sur l'embout 210, puis vissage de ce dernier dans le tube 200, l'immobilisation de l'assemblage est réalisée par le serrage du dispositif 2 contre l'extrémité du tube 200 au moyen d'un écrou 280. On notera que l'écrou 280 est plein, c'est-à-dire qu'il ne nécessite pas de perçages. Les trois rondelles 220, 240 et 260, en forme d'éléments annulaires, sont destinées à être superposées et accolées après l'immobilisation de l'assemblage.

En pratique, la face supérieure de la rondelle 260, sur laquelle est destinée à s'appuyer l'écrou 280, peut être enduite de produit lubrifiant sec ou gras ou de produit protecteur, de façon à réduire le risque qu'elle soit entraînée en rotation. Cela permet aussi de réaliser un serrage progressif de l'écrou 280, ce qui induit une précontrainte homogène du filetage. De même, la première et la deuxième rondelle 220 et 240 peuvent être enduites de produit lubrifiant et/ou protecteur.

La rondelle 260 comporte en outre deux languettes 268 et 269 qui s'étendent à sa périphérie externe et qui sont rabattables vers l'axe Z-Z' et sur au moins deux pans de l'écrou hexagonal 280. Les languettes 268 et 269 constituent, après avoir été pliées et rabattues contre l'écrou 280, un organe de blocage de l'écrou 280 en rotation par rapport à la rondelle 260.

Chacune des trois rondelles 220, 240 et 260 présente une forme globalement plate et cylindrique à base circulaire et d'axe central Z-Z'. Les trois rondelles 220, 240 et 260 constituant le dispositif 2 de blocage en rotation de l'assemblage représentent donc un encombrement axial limité. Chacune des trois rondelles 220, 240 et 260 peut aussi être remplacée par un élément annulaire non circulaire en section, du moins en périphérie externe.

Pour supporter les contraintes mécaniques engendrées par les couples de serrage ou de desserrage, la rondelle 220 et la rondelle 240 sont avantageusement réalisées en un matériau dur, tel que l'acier X5CrNiCuNb 17-04 ou équivalent. Dans le cas où l'organe de blocage en rotation de l'écrou 280 est constitué par les deux languettes 268 et 269 rabattables sur l'écrou, comme illustré par les figures, la rondelle 260 est réalisée en un matériau ductile tel que l'acier X2CrNi 18-9 ou équivalent.

Pendant le montage de l'assemblage, la deuxième rondelle 240 peut tourner librement par rapport aux rondelles 220 et 260. Cette liberté de rotation et la présence des stries sur les faces 221 et 242 permettent d'obtenir un réglage pas à pas, en particulier à pas micrométrique selon les dimensions du filetage et de chaque strie, pour le positionnement longitudinal relatif de l'embout 210 par rapport au tube 200.

Dans le cas d'une bielle, on peut ainsi régler son entraxe avec précision. Ce réglage peut être opéré lorsque, comme le montre la figure 7, les stries des rondelles 220 et 240 ne sont pas encore mutuellement imbriquées. Au contraire, après imbrication mutuelle des stries, celles-ci assurent un arrêt mécanique en rotation des rondelles 220 et 240, comme le montre la figure 8.

La figure 9 illustre un dispositif 3 de blocage en rotation conforme à un deuxième mode de réalisation de l'invention. La description du dispositif 2 donnée ci-dessus en relation avec les figures 2 à 8 peut être transposée au dispositif 3. Sur la figure 9, les éléments du dispositif 3 identiques ou correspondants à ceux du dispositif 2 illustré sur les figures 2 à 8 portent les mêmes références augmentées de 100.

Le dispositif 3 se distingue du dispositif 2 en ce que l'ergot 325 de la première rondelle 320 présente un profil en « Z », au lieu d'un profil plat, dont une aile coudée 327 est dirigée vers la troisième rondelle 360. Par « profil », on désigne ici la section d'un élément par un plan passant par l'axe Z-Z'. Comme pour le dispositif 2, la partie terminale de l'ergot 325 est reçue dans une lumière 366 rectangulaire et percée dans l'aile libre de la patte coudée 365.

Une telle géométrie permet de réduire la longueur axiale de la patte 365 de la rondelle 360 par rapport à la patte 265, ce qui facilite le passage d'une clé s'appuyant sur des méplats 201 et 202, représentés à la figure 2, de façon à maintenir le tube 200 pendant le vissage de l'écrou sur l'assemblage. De plus, l'ergot 325 peut ainsi supporter des couples de serrage ou de desserrage plus importants.

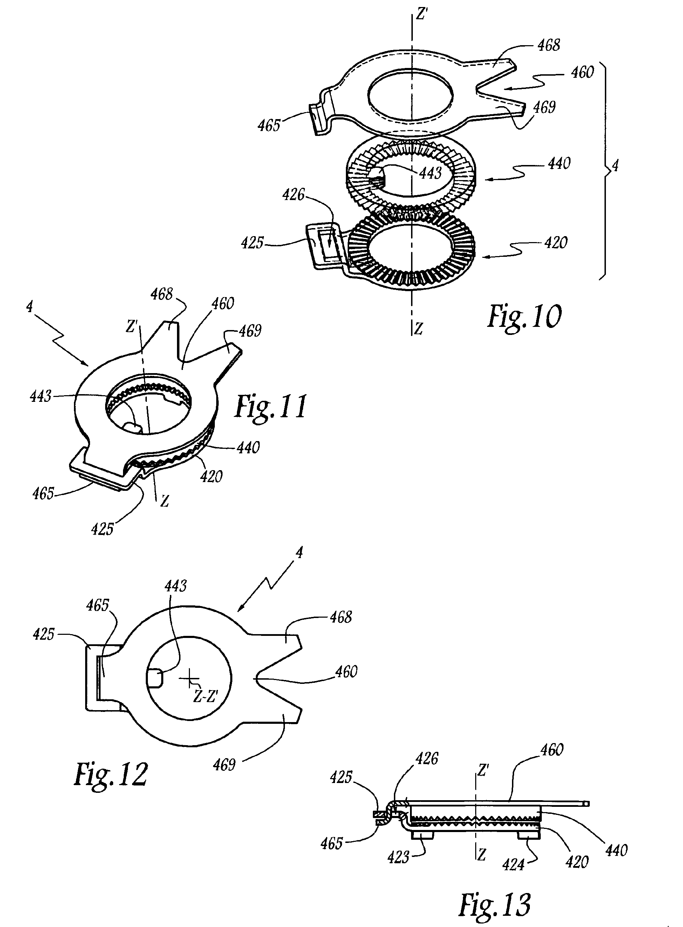

Les figures 10 à 13 illustrent un dispositif 4 conforme à un troisième mode de réalisation de l'invention. La description du dispositif 2 donnée ci-dessus en référence aux figures 2 à 8 peut être transposée au dispositif 4. Les éléments du dispositif 4 identiques ou correspondants à ceux du dispositif 2 portent les mêmes références augmentées de 200.

Le dispositif 4 se distingue du dispositif 2 en ce que l'ergot 425 et la patte 465 présentent des profils en « Z » convergents l'un vers l'autre. De plus, le blocage de la première rondelle 420 par rapport à la troisième rondelle 460 est ici réalisé par le passage de la patte 465 à travers une lumière 426 rectangulaire réalisée dans l'ergot 425, à l'inverse du dispositif 2. De plus, la lumière 426 s'étend dans un plan transversal à l'axe Z-Z'.

Une telle forme permet de réduire encore l'encombrement axial qu'occupent la patte 465 et l'ergot 425 en position serrée, par rapport au dispositif 2 ou 3. En outre, avec une telle forme, la patte 465 et l'ergot 425 présentent une robustesse accrue qui leur permet de supporter des couples de serrage ou de desserrage plus importants. Par ailleurs, à l'instar du dispositif 3, le dispositif 4 facilite le passage d'une clé pour maintenir le tube 200.

De plus, comme la lumière 426 est réalisée dans l'ergot 425 au lieu de la patte 465, il est possible d'utiliser la première rondelle 420 comme point d'amarrage pour un fil-frein, si bien que le dispositif 4 peut également être utilisé comme un dispositif de freinage à fil-frein de l'art antérieur, tel que celui illustré par la figure 1. Dans ce cas, l'assemblage peut se dispenser de la troisième rondelle 460, sous réserve d'utiliser un écrou percé tel que l'écrou 180 de la figure 1. En revanche, la largeur de la lumière 426 permet le passage de deux brins d'un même fil-frein. Cela permet de réaliser un montage symétrique du fil-frein, donc un montage indifférencié selon l'orientation à gauche ou à droite du pas du filetage, ce qui évite les risques d'erreurs lors de son montage.

Comme pour les dispositifs 2 et 3 la construction du dispositif 4 permet également d'arrêter la rotation de la troisième rondelle 460 pendant le réglage micrométrique entre les rondelles 420 et 440. Lorsque la tige filetée 211 est introduite dans les rondelles du dispositif 4, la rondelle 460 ne peut plus se dissocier de la rondelle 420 au cours du réglage micrométrique. La rondelle 420 est bloquée en rotation, par rapport au tube 200, au moyen de ses tenons 423 et 424. La rondelle 460 est bloquée en rotation, par rapport à la rondelle 420, au moyen de son ergot 465 retenu dans la lumière 426. La rondelle 440 est entraînée en rotation par l'intermédiaire de sa clavette 443 maintenue dans la rainure 213 de la tige filetée 211.

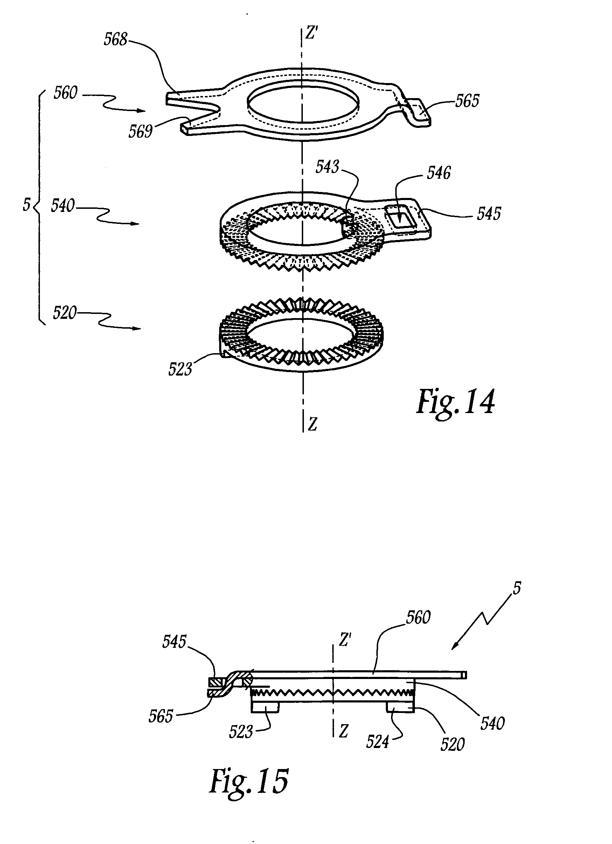

Les figures 14 et 15 illustrent un dispositif 5 conforme à un quatrième mode de réalisation de l'invention. La description du dispositif 2 donné ci-dessus en référence aux figures 4 et 8 peut être transposée au dispositif 5. Les éléments du dispositif 5 identiques ou correspondants à ceux du dispositif 2 portent les mêmes références augmentées de 300.

Dans le dispositif 5, l'ergot 545 est associé à la périphérie externe de la deuxième rondelle 540 plutôt qu'à celle de la première rondelle 520. Cela facilite la réalisation du dispositif 5 de blocage en rotation. Il peut cependant être souhaitable de bloquer l'écrou le plus directement possible par rapport au tube et donc, d'associer l'ergot à la première rondelle.

Selon une variante non représentée, pour bloquer en rotation le tube par rapport à la première rondelle, on peut prévoir un seul couple tenon-encoche ou, à l'inverse, plus de deux couples tenon-encoche, en fonction du couple de serrage ou de desserrage à supporter. La détermination du nombre et des dimensions des tenon(s) et encoche(s) dépend en effet des contraintes mécaniques qu'ils sont destinés à subir.

Selon une autre variante non représentée, on peut prévoir de réaliser une ou plusieurs encoche(s) sur la première rondelle et un ou plusieurs tenon(s) sur le tube. Une telle géométrie correspond à l'inverse des structures illustrées par les figures.

Selon une autre variante non représentée, la lumière de l'ergot peut présenter un profil ouvert.

## Revendications

1. Dispositif (2 ; 3 ; 4 ; 5) de blocage en rotation, pour immobiliser un assemblage comprenant un embout (210) muni d'un filetage (211) vissé dans un tube (200), ledit embout (210) comportant au moins une rainure longitudinale (213) s'étendant selon l'axe (Z-Z') de filetage (211) de l'embout (210), ledit tube (200) comportant au moins un élément de blocage en rotation (203, 204) situé sur son extrémité de réception de l'embout (210), ainsi qu'un écrou (280) apte à être vissé sur l'embout (210), le dispositif (2 ; 3 ; 4 ; 5) comprenant :
- une première rondelle (220 ; 320 ; 420 ; 520) dont une première face (222) est pourvue d'au moins un composant (223, 224 ; 323, 324 ; 423, 424 ; 523, 524) de blocage en rotation apte à coopérer avec ledit élément de blocage en rotation (203, 204), et
- une deuxième rondelle (240 ; 340 ; 440 ; 540) dont la périphérie interne est munie d'au moins une clavette (243 ; 343 ; 443 ; 543) apte à pénétrer dans ladite rainure longitudinale (213),
la périphérie externe de la première rondelle (220 ; 320 ; 420 ; 520) ou de la deuxième rondelle (240 ; 340 ; 440 ; 540) étant associée à au moins un ergot (225 ; 325 ; 425 ; 545), et deux faces (221, 242) respectives des première (220 ; 320 ; 420 ; 520) et deuxième (240 ; 340 ; 440 ; 540) rondelles comportant des moyens de blocage mutuel en rotation,
**caractérisé en ce qu'**il comprend, en outre, une troisième rondelle (260 ; 360 ; 460 ; 560) comportant au moins un organe de blocage en rotation (268, 269 ; 368, 369 ; 468, 469 ; 568, 569) de l'écrou (280), et **en ce que** la périphérie externe de la troisième rondelle (260 ; 360 ; 460 ; 560) comporte au moins une patte (265 ; 365 ; 465 ; 565) adaptée pour coopérer par complémentarité de formes avec ledit ergot (225 ; 325 ; 425 ; 545), de façon à bloquer en rotation, d'une part, la première (220 ; 320 ; 420 ; 520) ou la deuxième (240 ; 340 ; 440 ; 540) rondelle associée à l'ergot (225 ; 325 ; 425 ; 545) et, d'autre part, la troisième rondelle (260 ; 360 ; 460 ; 560).

2. Dispositif (2 ; 3 ; 4) selon la revendication 1, **caractérisé en ce que** ledit ergot (225 ; 325 ; 425) est associé à la première rondelle (220 ; 320 ; 420).

3. Dispositif (2 ; 3 ; 4 ; 5) selon la revendication 1 ou 2, **caractérisé en ce que** chaque rondelle (220, 240, 260 ; 320, 340, 360 ; 420, 440, 460 ; 520, 540, 560) présente une forme globalement plate et cylindrique.

4. Dispositif (2 ; 3) selon l'une des revendications précédentes, **caractérisé en ce que** l'ergot (225 ; 325) présente un profil plat ou coudé et **en ce que** la patte (265, 365) comprend une partie coudée formant une aile percée d'une lumière (266 ; 366) adaptée pour recevoir, de manière complémentaire, une partie terminale de l'ergot (225 ; 325).

5. Dispositif (4 ; 5) selon l'une des revendications 1 à 3, **caractérisé en ce que** la patte (465 ; 565) présente un profil en Z et **en ce que** l'ergot (425 ; 545) présente un profil plat ou coudé ainsi qu'une lumière (426 ; 546) adaptée pour recevoir, de manière complémentaire, une partie terminale de la patte (465 ; 565).

6. Dispositif (2, 3, 4 ; 5) selon l'une des revendications précédentes, **caractérisé en ce que** les moyens de blocage mutuel en rotation des première (220; 320; 420; 520) et deuxième (240; 340; 440 ; 540) rondelles comprennent deux séries de stries complémentaires.

7. Dispositif (2 ; 3 ; 4 ; 5) selon l'une des revendications précédentes, **caractérisé en ce que** l'organe de blocage en rotation de l'écrou (280) comporte deux languettes (268, 269 ; 368, 369 ; 468, 469 ; 568, 569) qui s'étendent à la périphérie externe de la troisième rondelle (260 ; 360 ; 460 ; 560) et qui sont rabattables sur l'écrou (280).

8. Dispositif (2 ; 3 ; 4 ; 5) selon l'une des revendications précédentes, **caractérisé en ce que** les première (220 ; 320 ; 420 ; 520) et deuxième (240 ; 340 ; 440 ; 540) rondelles sont réalisées en un matériau dur et **en ce que** la troisième rondelle (260 ; 360 ; 460 ; 560) est réalisée en un matériau ductile.

9. Assemblage comprenant un embout (210) muni d'un filetage (211) à visser dans un tube (200), un écrou (280) apte à être vissé sur l'embout (210), ledit embout (210) comportant au moins une rainure longitudinale (213) s'étendant selon l'axe (Z-Z') de filetage (211) de l'embout (210), ledit tube (200) comportant au moins un élément de blocage en rotation (203, 204) situé sur son extrémité de réception de l'embout (210), **caractérisé en ce qu'**il comprend un dispositif (2 ; 3 ; 4 ; 5) de blocage en rotation selon l'une quelconque des revendications précédentes, de façon à immobiliser ledit assemblage.

10. Utilisation de l'assemblage selon la revendication 9, pour la construction aéronautique, dans laquelle le tube (200) est un corps de bielle et l'embout (210) est une tête de bielle.

## Claims

1. An anti-rotation lock device (2; 3; 4; 5) for preventing movement in an assembly comprising an endpiece (210) provided with a thread (211) screwed into a tube (200), said endpiece (210) including at least one longitudinal groove (213) extending along the axis (Z-Z') of the thread (211) of the endpiece (210), said tube (200) including at least one anti-rotation lock element (203, 204) situated at its end for receiving the endpiece (210), the assembly further comprising a nut (280) suitable for being screwed on the endpiece (210), and the device (2; 3; 4; 5) comprising:
a first washer (220; 320; 420; 520) having a first face (222) provided with at least one anti-rotation lock component (223, 224; 323, 324; 423, 424; 523, 524) suitable for co-operating with said anti-rotation lock elements (203, 204); and
a second washer (240; 340; 440; 540) having its inner periphery provided with at least one key (243; 343; 443; 543) suitable for penetrating in said longitudinal groove (213);
the outer periphery of the first or second washer (220, 320, 420, 520; 240, 340, 440, 540) being associated with at least one lug (225; 325; 425; 545), and two respective faces (221, 242) of the first and second washers (220, 320, 420, 520; 240, 340, 440, 540) including means for locking them mutually against rotation;
the device being **characterized in that** it further comprises a third washer (260; 360; 460; 560) including at least one member (268, 269; 368, 369; 468, 469; 568, 569) for locking the nut (280) against rotation, and **in that** the outer periphery of the third washer (260; 360; 460; 560) includes at least one tab (265; 365; 465; 565) adapted to co-operate with said lug (225; 325; 425; 545) by being complementary in shape thereto so as to lock the first or the second washer (220, 320, 420, 520; 240, 340, 440, 540) associated with the lug (225; 325; 425; 525) against rotation relative to the third washer (260; 360; 460, 560).

2. A device (2; 3; 4) according to claim 1, **characterized in that** said lug (225; 325, 425) is associated with the first washer (220; 320; 420).

3. A device (2; 3; 4; 5) according to claim 1 or claim 2, **characterized in that** each washer (220, 240, 260; 320, 340, 360; 420, 440, 460; 520, 540, 560) is generally flat and cylindrical in shape.

4. A device (2; 3) according to any preceding claim, **characterized in that** the lug (225; 325) presents a flat or bent profile and **in that** the tab (265, 365) has a bent portion forming a flap pierced by a slot (266; 366) adapted to receive in complementary manner a terminal portion of the lug (225; 325).

5. A device (4; 5) according to any one of claims 1 to 3, **characterized in that** the tab (465; 565) presents a Z-shaped profile, and **in that** the lug (425; 545) presents a flat or bent profile together with a slot (426; 546) adapted to receive, in complementary manner, a terminal portion of the tab (465; 565).

6. A device (2; 3; 4; 5) according to any preceding claim, **characterized in that** the means for locking the first and second washers (220; 320; 420; 520) against mutual rotation comprise two series of complementary serrations.

7. A device (2; 3; 4; 5) according to any preceding claim, **characterized in that** the member for locking the nut (280) against rotation comprise two tongues (268, 269; 368, 369; 468, 469; 568, 569) that extend from the outer periphery of the third washer (260; 360; 460; 560) and that are foldable against the nut (280).

8. A device (2; 3; 4; 5) according to any preceding claim, **characterized in that** the first and second washers (220; 320; 420; 520) are made of a hard material, and **in that** the third annular element (260; 360; 460; 560) is made of a ductile material.

9. An assembly comprising an endpiece (210) having a thread (211) for screwing in a tube (200), a nut (280) suitable for being screwed on the endpiece (210), said endpiece (210) including at least one longitudinal groove (213) extending along the axis (Z-Z') of the thread (211) of the endpiece (210), said tube (200) including at least one anti-rotation lock element (203, 204) situated on its end for receiving the endpiece (210), the assembly being **characterized in that** it includes an anti-rotation lock device (2; 3; 4; 5) according to any preceding claim, so as to prevent said assembly from moving.

10. The use of the assembly according to claim 9, in aircraft manufacture, in which the tube (200) is a rod body and the endpiece (210) is a fork clevis.

## Patentansprüche

1. Vornichtung (2; 3; 4; 5) zur Blockierung bei Drehung zum Fixieren eines Verbinder, der einen mit einem Gewinde (211) versehenen Ansatz (210) aufweist, der in ein Rohr (200) geschraubt ist, wobei der Ansatz (210) mindestens eine Längsrille (213) aufweist, die sich entlang der Gewindeachse (Z-Z') (211) des Ansatzes (210) erstreckt, wobei das Rohr (200) mindestens ein Element zum Sperren bei Drehung (203, 204) aufweist, das sich auf dem Aufnahmeende des Ansatzes (210) befindet, sowie eine Mutter (280), die auf den Ansatz (210) geschraubt werden kann, wobei die Vorrichtung (2; 3; 4; 5) Folgendes aufweist:
- eine erste Unterlegscheibe (220; 320; 420; 520), von der eine erste Seite (222) mit mindestens einem Bauteil (223, 224; 323, 324; 423, 424; 523, 524) zum Blockieren in Drehung versehen ist, der mindestens mit dem Element (203, 204) zum Blockieren in Drehung zusammenwirken kann, und
- eine zweite Unterlegscheibe (240; 340; 440; 540), von der Innenumfang mit mindestens einem Keil (243; 343; 443; 543) versehen ist, der in die Längsrille (213) eindringen kann,
wobei der Außenumfang der ersten Unterlegscheibe (220; 320; 420; 520) oder der zweiten Unterlegscheibe (240; 340; 440; 540) mit mindestens einem Dorn (225; 325; 425; 545) versehen ist, und zwei Seiten (221!, 242) jeweils der ersten Unterlegscheibe (220; 320; 420; 520) und der zweiten Unterlegscheibe (240; 340; 440; 540) Mittel zum gegenseitigen Blockieren in Drehung aufweisen,
**dadurch gekennzeichnet, dass** sie ferner eine dritte Unterlegscheibe (260; 360; 460; 560) aufweist, die mindestens ein Organ zum Blockieren in Drehung (268, 269; 368, 369; 468, 469; 568, 569) der Mutter (280) aufweist, und dass der Außenumfang der dritten Unterlegscheibe (260; 360; 460; 560) mindestens eine Pratze (265; 365; 465; 565) aufweist, die durch Formkomplementarität mit dem Dorn (225; 325; 425; 545) derart zusammenwirken kann, dass einerseits die erste Unterlegscheibe (220; 320; 420; 520) oder die zweite Unterlegscheibe (240; 340; 440; 540) verbunden mit dem Dorn (225; 325; 425; 545) und andererseits die dritte Unterlegscheibe (260; 360; 460; 560) in Drehung blockieren wird.

2. Vorrichtung (2; 3; 4) nach Anspruch 1, **dadurch gekennzeichnet, dass** der Dorn (225; 325; 425) mit der ersten Unterlegscheibe (220; 320; 420) verbunden ist.

3. Vorrichtung (2; 3; 4; 5) nach Anspruch 1 oder 2, **dadurch gekennzeichnet, dass** jede Unterlegscheibe (220, 240, 260; 320, 340, 360; 420, 440, 460; 520, 540, 560) eine insgesamt flache und zylindrische Form aufweist.

4. Vorrichtung (2; 3) nach einem der vorhergehenden Ansprüche, **dadurch gekennzeichnet, dass** der Dorn (225; 325) ein flaches oder abgewinkeltes Profil aufweist, und dass die Pratze (265, 365) einen abgewickelten Teil aufweist, der einen Flügel bildet, der mit einem Langloch (266; 366) durchbohrt ist, das komplementär einen Endteil des Dorns (225; 325) aufnehmen kann.

5. Vorrichtung (4; 5) nach einem der Ansprüche 1 bis 3, **dadurch gekennzeichnet, dass** die Pratze (465; 565) ein Z-Profil aufweist, und dass der Dorn (425; 545) ein flaches oder abgewinkeltes Profil sowie ein Langloch (426; 456) aufweist, das komplementär einen Endteil der Pratze (465; 565) aufnehmen kann.

6. Vorrichtung (2, 3, 4; 5) nach einem der vorhergehenden Ansprüche, **dadurch gekennzeichnet, dass** die Mittel zum gegenseitigen Blockieren in Drehung der ersten Unterlegscheibe (220; 320; 420; 520) und der zweiten Unterlegscheibe (240; 340; 440; 540) zwei Reihen komplementäre Riffelungen aufweisen.

7. Vorrichtung (2; 3; 4; 5) nach einem der vorhergehenden Ansprüche, **dadurch gekennzeichnet, dass** das Organ zum Blockieren in Drehung der Mutter (280) zwei Laschen (268, 269; 368, 369; 468, 469; 568, 569) aufweist, die sich am Außenrand der dritten Unterlegscheibe (260; 360; 460; 560) erstrecken und auf die Mutter (280) umgeschlagen werden können.

8. Vorrichtung (2; 3; 4; 5) nach einem der vorhergehenden Ansprüche, **dadurch gekennzeichnet, dass** die erste Unterlegscheibe (220; 320; 420; 520) und die zweite Unterlegscheibe (240; 340; 440; 540) aus einem harten Werkstoff hergestellt sind und dass die dritte Unterlegscheibe (260; 360; 460; 560) aus einem plastischen Werkstoff hergestellt ist.

9. Verbinder, der einen mit einem Gewinde (211) versehenen Ansatz (210) aufweist, der in ein Rohr (200) zu schrauben ist, eine Mutter (280), die auf den Ansatz (210) geschraubt werden kann, wobei der Ansatz (210) mindestens eine Längsrille (213) aufweist, die sich entlang der Achse (Z-Z') des Gewindes (211) des Ansatzes (210) erstreckt, wobei das Rohr (200) mindestens ein Element (203, 204) zum Blockieren bei Drehung aufweist, das sich am Aufnahmeende des Ansatzes (210) befindet, **dadurch gekennzeichnet, dass** es eine Vorrichtung (2; 3; 4; 5) zum Blockieren bei Drehung nach einem der vorhergehenden Ansprüche derart aufweist, dass der Verbinder fixiert wird.

10. Einsatz des Verbinders nach Anspruch 9 für die Luftfahrtkonstruktion, bei der das Rohr (200) ein Pleuelkörper und der Ansatz (210) ein Pleuelkopf ist.
